# FASCICULE DE BREVET EUROPEEN

(11) **EP 3 672 862 B1**
(45) Date de publication et mention de la délivrance du brevet: **25.08.2021**
(21) Numéro de dépôt: 18752574.6
(22) Date de dépôt: 09.07.2018
(51) Int. Cl.: B62D 25/02, B62D 27/02

(54) **ENSEMBLE D'ÉLÉMENTS DE CARROSSERIE D'UN VÉHICULE AUTOMOBILE FIXÉS ENTRE EUX PAR POINT DE SOUDURE ÉLECTRIQUE VIA DES EMBOÎTURES**
SATZ VON KAROSSERIEBAUTEILEN FÜR EIN KRAFTFAHRZEUG, DIE MITEINANDER DURCH EINEN ELEKTRISCHEN SCHWEISSPUNKT MITTELS FASSUNGEN BEFESTIGT SIND.
SET OF BODY COMPONENTS FOR A MOTOR VEHICLE SECURED TOGETHER BY AN ELECTRIC WELDING POINT BY MEANS OF SOCKETS

(30) Priorité: 22.08.2017 FR 1757794
(43) Date de publication de la demande: 01.07.2020
(73) Titulaire: PSA Automobiles SA, 78300 Poissy (FR)
(72) Inventeur: LEFEVRE, Eric, 91470 Limours (FR); BOURE, François, 95000 Cergy (FR)
(86) Numéro de dépôt international: PCT/FR2018/051727
(87) Numéro de publication internationale: WO 2019/038485

(56) Documents cités:
- US-A1- 2011 233 970
- US-B2- 9 487 239

## Description

La présente invention relève du domaine des véhicules automobiles. L'invention concerne plus particulièrement les modalités de fixation d'éléments de carrosserie dans l'environnement de la jonction entre un montant et un arc de pavillon longitudinal que comprend la caisse du véhicule.

Les véhicules automobiles comprennent une caisse sur laquelle sont montés divers équipements et/ou accessoires du véhicule. La caisse ménage la cellule du véhicule en formant un ensemble robuste revêtu d'un habillage. La caisse comprend des éléments de carrosserie qui sont assemblés entre eux en formant une ossature définissant l'architecture de la caisse et conférant au véhicule sa résistance à la déformation, notamment en cas de choc.

Parmi les éléments de carrosserie conférant à la caisse son architecture, il est plus spécifiquement considéré par l'invention des arcs de pavillon longitudinaux et des montants latéraux. Les arcs de pavillon s'étendent essentiellement suivant l'extension longitudinale de la caisse et les montants sont disposés latéralement de part et d'autre de la caisse en s'étendant essentiellement suivant son extension verticale.

Il est communément admis dans le domaine automobile d'identifier l'extension de la caisse et/ou de ses composants suivant des directions longitudinale, transversale et verticale définissant un repère orthonormé.

La caisse s'étend longitudinalement entre l'avant et l'arrière du véhicule suivant les sens avant et arrière de sa progression, verticalement perpendiculairement depuis le plan de roulage du véhicule et transversalement perpendiculairement à l'extension longitudinale et l'extension verticale de la caisse.

Par suite les notions relatives latérales, ou autres notions apparentées, sont définies de part et d'autre de la caisse suivant son extension transversale. Les notions relatives supérieur et inférieur, ou autres notions apparentées, sont définies suivant l'extension verticale de la caisse par rapport à son plan de roulage. Les notions relatives avant et arrière, ou autres notions apparentées, sont définies suivant l'extension longitudinale de la caisse.

Dans le contexte de l'invention, les arcs de pavillon s'étendent longitudinalement et sont disposés latéralement de part et d'autre de la caisse, en étant fixés au sommet de montants latéraux qui leurs sont affectés. Les arcs de pavillon sont notamment ménagés en prolongement de montant de baie. Les montants sont en outre couramment exploités pour le montage d'ouvrants latéraux clôturant des accès à l'intérieur de l'habitacle du véhicule.

Les arcs de pavillon et les montants sont renforcés à l'encontre d'une déformation de la caisse, notamment en torsion. A cet effet, des renforts d'arc d'extension longitudinale sont rapportés le long des arcs de pavillon. Des renforts de montant d'extension verticale sont rapportés contre les montants. En outre, des doublures d'arc sont rapportées contre les renforts d'arcs et des doublures de montants sont rapportées contre les renforts de montants.

Ainsi à chacun des côtés latéraux de la caisse, il est considéré un ensemble d'éléments de carrosserie comprenant un premier sous-ensemble d'éléments équipant un arc de pavillon et un deuxième sous ensemble d'éléments équipant un montant.

Successivement vers l'intérieur de la caisse suivant sa direction transversale d'extension et à chacun de ses cotés latéraux :
-) le premier sous-ensemble d'éléments comprend un renfort d'arc configuré pour être monté le long de l'arc de pavillon, et comprend une doublure d'arc configurée pour être montée le long du renfort d'arc,
-) le deuxième sous-ensemble d'éléments comprend un renfort de montant configuré pour être fixé le long du montant suivant son extension verticale, et comprend une doublure de montant configurée pour être montée le long du renfort de montant suivant son extension verticale.

Il se pose dès lors le problème de la fixation des éléments de carrosserie composant ledit ensemble d'éléments de carrosserie sur la caisse du véhicule, et plus spécifiquement sur le bloc robuste formé par l'arc de pavillon et le montant qui sont solidarisés l'un à l'autre via le sommet du montant.

Il est courant de fixer successivement des éléments de carrosserie participant d'un dit ensemble d'éléments de carrosserie via des feuillures qu'ils comportent, tel qu'il ressort par exemple des documents US9487239 et US9643655. Les feuillures ménagent des parois des éléments de carrosserie qui sont empilées pour la fixation successive deux à deux des éléments de carrosserie. Le document US 2011/233970 A1 divulgue un ensemble d'éléments de carrosserie pour un véhicule automobile et le préambule de la revendication 1.

Dans ce contexte, la présente invention a pour objet un ensemble d'éléments de carrosserie pour un véhicule automobile, comprenant successivement un renfort de montant, un renfort d'arc, une doublure d'arc et une doublure de montant. L'invention a aussi pour objet une caisse de véhicule automobile équipée de dits ensembles d'éléments de carrosserie répartis latéralement de part et d'autre de la caisse. L'invention a encore pour objet une méthode d'assemblage entre eux des éléments de carrosserie dudit ensemble.

Le but de l'invention est de proposer des modalités de fixation des éléments de carrosserie que comprend ledit ensemble d'éléments de carrosserie. Il est notamment recherché une solution satisfaisante pour fixer les éléments de carrosserie entre eux, en tenant notamment compte de diverses contraintes et/ou difficultés à surmonter.

Une contrainte réside dans la résistance de la caisse, notamment en torsion, et des tolérances admises vis-à-vis de sa déformation et/ou de la déformation des éléments de carrosserie dont la caisse est équipée, notamment en cas de choc subi par le véhicule.

Une autre contrainte réside dans la fixation efficace et pérenne sur la caisse de chacun des éléments composant ledit ensemble d'éléments de carrosserie, en tenant compte des divers efforts qu'ils sont susceptibles de supporter, individuellement et/ou collectivement, et de la tolérance admise de leur déformation.

Parmi les difficultés à surmonter, il est aussi à tenir compte de l'espace disponible restreint pour réaliser la fixation recherchée des éléments de carrosserie entre eux et/ou sur la caisse du véhicule. Plus spécifiquement, l'environnement de la zone de jonction entre l'arc de pavillon et le sommet du montant est susceptible d'être encombrée par divers accessoire(s) et/ou équipements (s) du véhicule, voire aussi par une ou plusieurs garnitures qu'il est aussi nécessaire de fixer à la caisse.

Une autre difficulté est de tenir compte de la compétitivité économique notoirement sévère dans le domaine automobile. La solution recherchée pour réaliser la fixation des éléments dudit ensemble d'éléments de carrosserie sur la caisse du véhicule doit pouvoir être réalisée à moindres coûts sans affecter son efficacité.

Une telle recherche de réduction des coûts concerne non seulement la méthode de fixation des éléments de carrosserie entre eux et/ou sur la caisse, mais aussi leur aménagement propre pour réaliser de telles fixations.

Le but visé par la présente invention est atteint par application des dispositions qui suivent, considérées isolément ou en combinaison.

L'ensemble de carrosserie de l'invention comprend successivement un renfort de montant, un renfort d'arc, une doublure d'arc et une doublure de montant qui sont successivement fixés les uns aux autres suivant une direction d'assemblage.

Selon l'invention, il est considéré un premier groupe d'éléments de carrosserie comprenant le renfort de montant, le renfort d'arc et la doublure d'arc. Les éléments de carrosserie du premier groupe sont successivement fixés l'un à l'autre par au moins un point de soudure électrique, via des emboîtures qu'ils comportent respectivement. Les emboîtures s'interpénètrent entre elles suivant la direction d'assemblage par emboîtement successif des emboîtures les unes à l'intérieur des autres.

Ainsi, les emboîtures forment des organes de positionnement relatifs des éléments de carrosserie du premier groupe les uns par rapport aux autres. En outre, les emboîtures emboîtées successivement les unes dans les autres forment des organes de renfort de la fixation entre eux des éléments de carrosserie du premier groupe via au moins le point de soudure électrique.

Selon une forme de réalisation, les emboîtures sont chacune configurées en caisson. Chaque caisson, ou autrement dit chacune des emboîtures, comprend une paroi périphérique ménageant une enceinte et comprend une paroi de fond fermant l'enceinte en étant orientée sensiblement perpendiculairement à la direction d'assemblage. Les emboîtures successivement emboîtées les unes dans les autres sont solidarisées les unes aux autres via la paroi de fond par le point de soudure électrique.

De préférence, les parois périphériques des emboîtures portent successivement les unes contre les autres, au moins en partie, en procurant le positionnement relatif des éléments de carrosserie du premier groupe et/ou pour le renfort de leur fixation entre eux via les parois de fond des emboîtures.

Ainsi selon une forme de réalisation, les parois périphériques des emboîtures portent les unes contre les autres successivement deux à deux. Les parois de fond des emboîtures portent les unes contre les autres successivement deux à deux en étant fixées entre elles par le point de soudure électrique.

De préférence, la formation du point de soudure électrique est réalisée après mise en interposition entre le renfort de montant et la doublure de montant, d'un deuxième groupe d'éléments de carrosserie comprenant le renfort d'arc et la doublure d'arc. Dans ce contexte, il est proposé d'exploiter la formation d'une fenêtre à travers la doublure de montant, pour permettre le passage suivant la direction d'assemblage d'un outil de soudage électrique vers l'intérieur de l'emboîture que comporte la doublure d'arc en application contre sa paroi de fond.

Ainsi selon une forme de réalisation, la doublure de montant comporte une fenêtre disposée en alignement des emboîtures suivant la direction d'assemblage. La fenêtre forme un passage à travers la doublure de montant qui est apte à être traversé par un outil de soudage électrique par point(s) vers la paroi de fond de l'emboîture que comporte la doublure d'arc.

La fenêtre est susceptible d'être ménagée spécifiquement pour le passage de l'outil de soudage électrique. Il est cependant mis à profit la formation d'une telle fenêtre à travers la doublure de montant pour le montage d'un accessoire sur la caisse. On notera qu'un cache et/ou une attache d'un tel accessoire peuvent être avantageusement exploités pour fermer la fenêtre à sa face orientée vers l'intérieur de la caisse, ou autrement dit à sa face opposée suivant la direction d'assemblage à celle orientée vers la doublure d'arc.

Plus spécifiquement selon un exemple avantageux de réalisation, ladite fenêtre est exploitée pour le montage d'un déflecteur de coussin gonflable communément désigné par le terme airbag en langue anglaise.

Selon une forme de réalisation, un cordon de colle structurale est interposé entre ledit deuxième groupe d'éléments de carrosserie comprenant pour rappel le renfort d'arc et la doublure d'arc. Le cordon de colle structurale est notamment ménagé entre les parois périphériques des emboîtures que comportent le renfort d'arc et la doublure d'arc.

Le cordon de colle structurale forme un organe de fermeture de l'espace s'étendant en interposition entre l'emboîture du renfort d'arc et l'emboîture de la doublure d'arc. Le cordon de colle structurale permet aussi de monter l'un à l'autre les éléments de carrosserie du deuxième groupe, notamment préalablement à leur fixation entre eux et conjointement au renfort de montant par le point de soudure électrique. Le cordon de colle structurale permet aussi de renforcer la jonction entre eux des éléments de carrosserie du deuxième groupe préalablement à leur fixation entre eux et conjointement sur le renfort de montant par le point de soudure électrique.

L'invention a aussi pour objet une caisse de véhicule automobile équipée d'ensembles d'éléments de carrosserie latéraux chacun conformes à l'invention.

Selon l'invention, les éléments de carrosserie dudit premier groupe de chacun des ensembles d'éléments de carrosserie sont fixés les uns aux autres par point(s) de soudure électrique via lesdites emboîtures.

De préférence, les éléments de carrosserie dudit deuxième groupe de chacun des ensembles d'éléments de carrosserie sont en outre fixés l'un à l'autre via un cordon de colle structurale. Le cordon de colle structurale est notamment interposé entre les parois périphériques des emboîtures que comportent le renfort d'arc et la doublure d'arc, en fermant l'espace entre les emboîtures que comportent respectivement le renfort d'arc et la doublure d'arc.

Selon une forme de réalisation, ladite fenêtre ménagée à travers la doublure de montant forme en outre un organe de réception d'une agrafe de fixation d'un accessoire du véhicule. Ladite agrafe forme un organe de fermeture de la fenêtre.

Autrement dit, la caisse comporte à chacun de ses côtés latéraux un ensemble d'éléments de carrosserie conforme à l'invention, qui est fixé à un arc de pavillon longitudinal et à un montant en étant disposés du côté intérieur de la caisse. Les éléments de carrosserie du premier groupe sont fixés successivement les uns aux autres via les emboîtures qu'ils comportent individuellement et qui sont successivement emboîtées les unes dans les autres suivant la direction d'assemblage.

Les emboîtures sont de préférence agencées en caisson, en étant ouvertes en direction de l'intérieur de la caisse suivant ladite direction d'assemblage ou autrement dit en étant ouvertes en direction de la doublure de montant. Les emboîtures présentent ainsi chacune un évidement délimité entre des parois périphériques et fermé par une paroi de fond, pour l'emboîtement successif des emboîtures les unes à l'intérieur des autres et la fixation par point de soudure électrique des éléments de carrosserie du premier groupe.

La doublure de montant comporte une fenêtre pour le montage d'un accessoire ou d'une garniture sur la caisse, tel que notamment un déflecteur d'un coussin gonflable. La fenêtre est orientée vers les emboîtures suivant la direction d'assemblage, notamment en regard de l'évidement de l'emboîture que comporte la doublure d'arc.

Ladite fenêtre procure alors un accès en direction de la paroi de fond des emboîtures suivant la direction d'assemblage, pour le passage de l'outil de soudage électrique par point à l'intérieur et vers la paroi de fond de l'emboîture que comporte la doublure d'arc suivant la direction d'assemblage.

Ainsi selon une méthode de l'invention, ladite méthode est une méthode d'assemblage entre des éléments de carrosserie d'un ensemble d'éléments de carrosserie conforme à l'invention. La méthode de l'invention comprend les opérations suivantes :
-) assembler les éléments de carrosserie du premier groupe par emboîtement successif suivant la direction d'assemblage du renfort de montant, du renfort d'arc et de la doublure d'arc, via les emboîtures qu'ils comportent, puis
-) souder ensemble les éléments de carrosserie du premier groupe par au moins un point de soudure électrique, via les emboîtures qu'ils comportent, au moyen d'un outil de soudage approché des emboîtures suivant la direction d'assemblage.

De préférence, la méthode comprend en outre une opération d'assemblage des éléments de carrosserie du deuxième groupe au moyen dudit cordon de colle structurale, préalablement à leur assemblage entre eux et au renfort de montant via les emboîtures par au moins un point de soudure électrique. Les éléments de carrosserie du deuxième groupe forment un sous ensemble d'éléments de carrosserie fixé au renfort de montant par le point de soudure électrique, en interposition entre le renfort de montant et la doublure de montant.

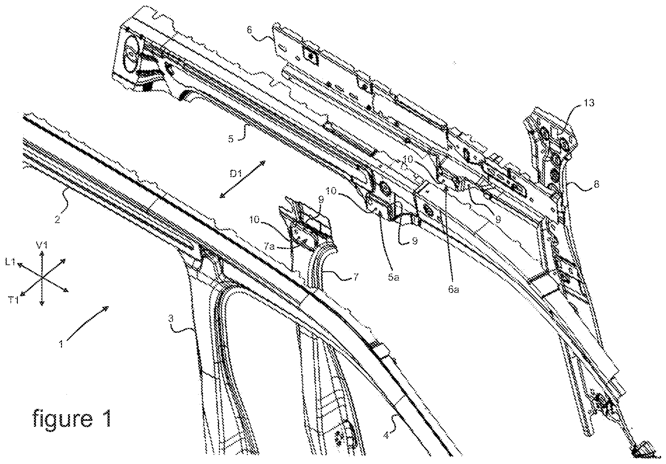

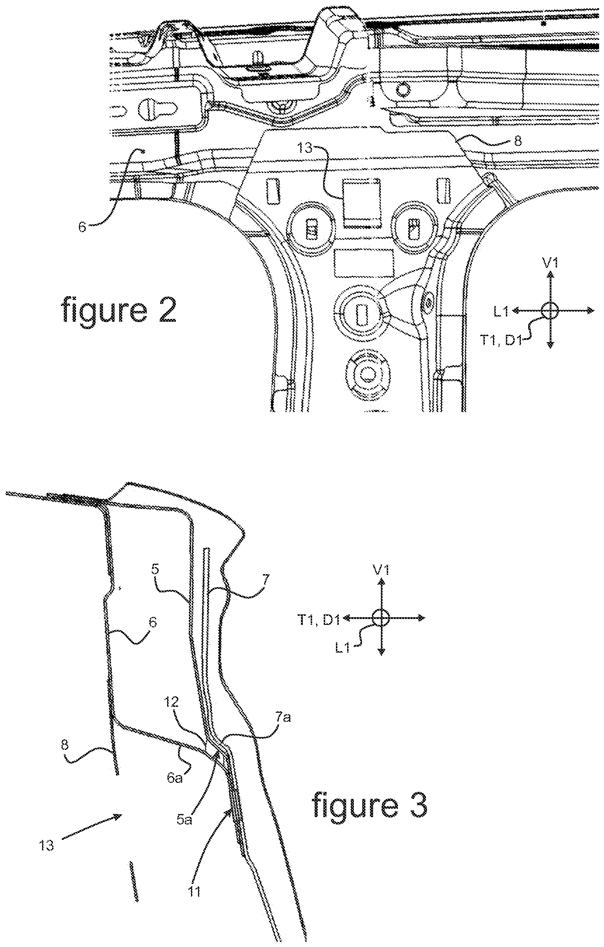

Un exemple de réalisation de la présente invention va être décrit en relation avec les figures des planches annexées, dans lesquelles :
-) La figure 1 est une illustration en perspective éclatée d'un ensemble d'éléments de carrosserie conforme à l'invention, en position d'installation sur la caisse d'un véhicule automobile.
-) La figure 2 est une illustration partielle de face vu de l'intérieur de la caisse, de l'ensemble d'éléments de carrosserie représenté sur la figure 1 en position d'installation sur la caisse.
-) La figure 3 est un schéma illustrant en coupe les positions relatives des éléments de carrosserie de l'ensemble d'éléments de carrosserie représenté sur la figure 1, en position d'installation sur la caisse.

Les figures et leurs descriptions détaillées exposent l'invention selon de modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, une caisse 1 de véhicule automobile comprend des éléments robustes formant une ossature définissant l'architecture globale de la caisse 1. Sur la figure, sont représentés partiellement un arc de pavillon 2 longitudinal et un montant 3 qui sont solidaires l'un de l'autre en participant de l'ossature de la caisse 1.

L'arc de pavillon 2 est ménagé en prolongement d'un montant de baie 4 et s'étend essentiellement suivant une direction longitudinale L1 à un côté latéral de la caisse 1 suivant sa direction transverse T1 d'extension. Le montant 3 s'étend verticalement V1 en étant solidaire de l'arc de pavillon 2 à son sommet par rapport au plan de roulage de la caisse 1.

L'arc de pavillon 2 est équipé d'un renfort d'arc 5 et d'une doublure d'arc 6. Le montant 3 est équipé d'un renfort de montant 7 et d'une doublure de montant 8. En direction de l'intérieur de la caisse 1 depuis l'ensemble des éléments de caisse 1 et plus spécifiquement depuis l'arc de pavillon 2 et le montant 3, l'ensemble d'éléments de carrosserie de l'invention comprend successivement le renfort de montant 7, le renfort d'arc 5, la doublure d'arc 6 et la doublure de montant 8.

Les éléments de carrosserie que comprend ledit ensemble d'éléments de carrosserie 7, 5, 6, 8 sont fixés successivement entre eux et audit ensemble d'éléments de caisse 2,4. Une telle fixation est opérée suivant une direction d'assemblage D1 orientée suivant la direction transversale T1 d'extension de la caisse 1.

Sur les figures 1 et 3, Il est considéré un premier groupe d'éléments de carrosserie comprenant le renfort de montant 7, le renfort d'arc 5 et la doublure d'arc 6.

Les éléments de carrosserie 7, 5, 6 du premier groupe comportent chacun une emboîture 7a, 5a, 6a pour leur jonction par emboîtement successivement les uns aux autres suivant la direction d'assemblage D1. Les emboîtures 7a, 5a, 6a sont notamment incorporées aux éléments de carrosserie 7, 5, 6 du premier groupe par mise en forme du matériau dont ils sont issus.

Plus particulièrement, le renfort de montant 7 comporte une première emboîture 7a logeant une deuxième emboîture 5a que comporte le renfort d'arc 5. La deuxième emboîture 5a loge une troisième emboîture 6a que comporte la doublure d'arc 6. Les éléments de carrosserie 7, 5, 6 du premier groupe sont ainsi successivement emboîtés les uns aux autres via les emboîtures 7a, 5a, 6a.

Les emboîtures 7a, 5a, 6a sont conformées en caisson présentant un évidement pour loger l'emboîture 5a, 6a d'un élément de carrosserie 5, 7 adjacent. Les emboîtures 7a, 5a, 6a comprennent chacune une paroi périphérique 9 et une paroi de fond 10 orientée dans un plan sensiblement perpendiculairement à la direction d'assemblage D1.

Lorsque les éléments de carrosserie 7, 5, 6 du premier groupe sont emboîtés successivement les uns avec les autres via les emboîtures 7a, 5a, 6a, les parois périphériques 9 des emboîtures 7a, 5a, 6a portent les unes contre les autres et les parois de fond 10 des emboîtures 7a, 5a, 6a sont appliquées les unes contre les autres. Autrement dit suivant la direction d'assemblage D1, les extensions des parois périphériques 9 des emboîtures 7a, 5a, 6a sont dimensionnées de sorte les parois de fond 10 des emboîtures 7a, 5a, 6a sont appliquées les unes contre les autres.

Lorsque les éléments de carrosserie 7, 5, 6 du premier groupe sont empilés suivant la direction d'assemblage D1 via les emboîtures 7a, 5a, 6a, les parois périphériques 9 des emboîtures 7a, 5a, 6a forment des organes de positionnement relatif entre les éléments de carrosserie 7, 5, 6 du premier groupe. Les parois périphériques 9 des emboîtures 7a, 5a, 6a forment aussi conjointement un organe de renfort des éléments de carrosserie 7, 5, 6 du premier groupe longitudinalement et transversalement à l'encontre de leur torsion.

Sur la figure 3, les parois de fond 10 des emboîtures 7a, 5a, 6a sont exploitées pour fixer par un point de soudure électrique 11 les éléments de carrosserie 7, 5, 6 du premier groupe entre eux. Autrement dit, un point de soudure électrique 11 à trois épaisseurs est formé dans les parois de fond 10 des emboîtures 7a, 5a, 6a.

Il est encore considéré un deuxième groupe d'éléments de carrosserie comprenant la doublure d'arc 6 et le renfort d'arc 5. Un cordon de colle structurale 12 est ménagé entre les parois périphériques 9 des emboîtures 6a, 5a que comportent la doublure d'arc 6 et le renfort d'arc 5.

Le cordon de colle structurale 12 ferme l'espace compris entre la deuxième emboîture 5a et la troisième emboîture 6a, en procurant une fixation supplémentaire entre la doublure d'arc 6 et le renfort d'arc 5 en complément du point de soudure électrique 11. Les parois périphériques 9 de la deuxième emboîture 5a et de la troisième emboîture 6a portent alors l'une contre l'autre via le cordon de colle structurale 12. La résistance à la torsion de la doublure d'arc 6 et du renfort d'arc 5 en est ainsi renforcée.

Sur les figures 1 et 2, la doublure de montant 8 comporte une fenêtre 13 pour le passage suivant la direction d'assemblage D1 de l'outil formant le point de soudure électrique 11 reliant entre elles les emboîtures 7a, 5a, 6a des éléments de carrosserie 7, 5, 6 du premier groupe via leurs parois de fond 10.

L'outil de soudage est prévu de traverser la doublure de montant 8 à travers la fenêtre 13, jusqu'à la paroi de fond 10 de la troisième emboîture 6a. Le point de soudure électrique 11 à trois épaisseurs peut ainsi être formé pour souder les emboîtures 7a, 5a, 6a entre elles via leurs parois de fond 10, et donc pour souder entre eux les éléments de carrosserie 7, 5, 6 du premier groupe.

Les éléments de carrosserie 5,6 du deuxième groupe sont interposés entre le renfort de montant 7 et la doublure 8. Le renfort de montant peut être logé à l'intérieur du montant 3 et l'ensemble de carrosserie 7, 5, 6, 8 peut être fixé sur la caisse 1, au moins via la doublure de montant 8 appliquée et fixée contre le renfort de montant 7 et/ou contre le montant 3.

## Revendications

1. Ensemble d'éléments de carrosserie pour un véhicule automobile, comprenant successivement un renfort de montant (7), un renfort d'arc (5), une doublure d'arc (6) et une doublure de montant (8) successivement fixés les uns aux autres suivant une direction d'assemblage (D1), tel qu'un premier groupe d'éléments de carrosserie comprenant le renfort de montant (7), le renfort d'arc (5) et la doublure d'arc (6), sont successivement fixés l'un à l'autre par au moins un point de soudure électrique (11), via des emboîtures (7a, 5a, 6a) que les éléments de carrosserie (7, 5, 6) du premier groupe comportent respectivement et **caractérisé en ce que** les éléments de carrosserie du premier groupe s'interpénètrent entre elles suivant la direction d'assemblage (D1) par emboîtement successif des emboîtures (7a, 5a, 6a) les unes à l'intérieur des autres.

2. Ensemble d'éléments de carrosserie selon la revendication 1, **caractérisé en ce que** les emboîtures (7a, 5a, 6a) sont chacune configurées en caisson qui comprend une paroi périphérique (9) ménageant une enceinte et qui comprend une paroi de fond (10) fermant l'enceinte en étant orientée sensiblement perpendiculairement à la direction d'assemblage (D1), via laquelle paroi de fond (10) les emboîtures (7a, 5a, 6a) successivement emboîtées les unes dans les autres sont solidarisées les unes aux autres par le point de soudure électrique (11).

3. Ensemble d'éléments de carrosserie selon la revendication 2, **caractérisé en ce que** les parois périphériques (9) des emboîtures (7a, 5a, 6a) portent les unes contre les autres successivement deux à deux, et **en ce que** les parois de fond (10) des emboîtures (7a, 5a, 6a) portent les unes contre les autres successivement deux à deux en étant fixées entre elles par le point de soudure électrique (11).

4. Ensemble d'éléments de carrosserie selon l'une quelconque des revendications 1 à 3, **caractérisé en ce que** la doublure de montant (8) comporte une fenêtre (13) disposée en alignement des emboîtures (7a, 5a, 6a) suivant la direction d'assemblage (D1), la fenêtre (13) formant un passage à travers la doublure de montant (8) qui est apte à être traversé par un outil de soudage électrique par point(s) vers la paroi de fond (10) de l'emboîture (6a) que comporte la doublure d'arc (6).

5. Ensemble d'éléments de carrosserie selon l'une quelconque des revendications 1 à 4, **caractérisé en ce qu'**un cordon de colle structurale (12) est interposé entre un deuxième groupe d'éléments de carrosserie comprenant le renfort d'arc (5) et la doublure d'arc(6), le cordon de colle structurale (12) étant ménagé entre les parois périphériques (9) des emboîtures (5a, 6a) que comportent le renfort d'arc (5) et la doublure d'arc (6).

6. Caisse (1) de véhicule automobile équipée d'ensembles d'éléments de carrosserie latéraux selon l'une quelconque des revendications 1 à 5, **caractérisée en ce que** les éléments de carrosserie (7, 5, 6) dudit premier groupe de chacun des ensembles d'éléments de carrosserie sont fixés les uns aux autres par point(s) de soudure électrique (11) via lesdites emboîtures (7a, 5a, 6a).

7. Caisse (1) de véhicule automobile selon la revendication 6, **caractérisé en ce que** les éléments de carrosserie (5, 6) dudit deuxième groupe de chacun des ensembles d'éléments de carrosserie sont en outre fixés l'un à l'autre via un cordon de colle structurale (12) interposé entre les parois périphériques (9) des emboîtures (5a, 6a) que comportent le renfort d'arc (5) et la doublure d'arc (6).

8. Caisse (1) de véhicule automobile selon l'une quelconque des revendications 6 et 7, **caractérisée en ce que** ladite fenêtre (13) ménagée à travers la doublure de montant (8) forme en outre un organe de réception d'une agrafe de fixation d'un accessoire du véhicule, ladite agrafe formant un organe de fermeture de la fenêtre (13).

9. Méthode d'assemblage entre des éléments de carrosserie d'un ensemble d'éléments de carrosserie selon l'une quelconque des revendications 1 à 5, **caractérisée en ce qu'**elle comprend les opérations suivantes :
-) assembler les éléments de carrosserie (7, 5, 6) du premier groupe par emboîtement successif suivant la direction d'assemblage (D1) du renfort de montant (7), du renfort d'arc (5) et de la doublure d'arc (6), via les emboîtures (7a, 5a, 6a) qu'ils comportent, puis
-) souder ensemble les éléments de carrosserie (7, 5, 6) du premier groupe par au moins un point de soudure électrique (11) via les emboîtures (7a, 5a, 6a) qu'ils comportent, au moyen d'un outil de soudage approché des emboîtures (7a, 5a, 6a) suivant la direction d'assemblage (D1).

10. Méthode selon la revendication 9, **caractérisée en ce qu'**il comprend en outre une opération d'assemblage des éléments de carrosserie (5, 6) du deuxième groupe au moyen dudit cordon de colle structurale (12), préalablement à leur assemblage entre eux et au renfort de montant (7) via les emboîtures (7a, 5a, 6a) par au moins un point de soudure électrique (11).

## Patentansprüche

1. Karosserieteil für ein Kraftfahrzeug, das nacheinander eine Ständerverstärkung (7), eine Bogenverstärkung (5), eine Bogeneinlage (6) und eine Ständereinlage (8) umfasst, die nacheinander in einer Verbindungsrichtung (D1) befestigt sind, wie eine erste Gruppe von Karosserieteilen, die die Ständerverstärkung (7), die Bogenverstärkung (5) umfasst () und die Lichtbogeneinlage (6) sind nacheinander durch mindestens einen elektrischen Schweißpunkt (11) über Steckverbindungen (7a, 5a, 6a), die die Karosserieteile (7, 5, 6) der ersten Gruppe jeweils aufweisen und die in Verbindungsrichtung (D1) durch nachfolgendes Einstecken der Karosserieteile (f) miteinander in Eingriff kommen Steckvorrichtungen (7a, 5a, 6a) ineinander.

2. Karosserieteil-Anordnung nach Anspruch 1, **dadurch gekennzeichnet, dass** die Einsteckelemente (7a, 5a, 6a) jeweils als Kasten ausgebildet sind, der eine Umfangswand (9) aufweist, die ein Gehäuse bildet, und der eine Bodenwand (10) aufweist, die das Gehäuse im Wesentlichen senkrecht zur Verbindungsrichtung (D1) verschließt, über die die die Einsteckverbindungen verlaufen (7a, 5a, 6a) nacheinander ineinander gesteckt sind durch die elektrische Schweißstelle (11) fest miteinander verbunden.

3. Karosserieteil-Anordnung nach Anspruch 2, **dadurch gekennzeichnet, dass** die Umfangswände (9) der Einsteckelemente (7a, 5a, 6a) nacheinander zwei bis zwei aneinander anliegen und dass die Bodenwände (10) der Einsteckelemente (7a, 5a, 6a) nacheinander zwei bis zwei aneinander anliegen, wobei sie durch die elektrische Schweißstelle (11)

4. Karosserieteil-Anordnung nach einem der Ansprüche 1 bis 3, **dadurch gekennzeichnet, dass** das Pfostenfutter (8) ein Fenster (13) aufweist, das in Ausrichtung der Steckelemente (7a, 5a, 6a) in Verbindungsrichtung (D1) angeordnet ist, wobei das Fenster (13) einen Durchgang durch das Pfostenfutter (8) bildet, das durch ein Werkzeug durchsetzbar ist elektrische Punktschweißung zur Bodenwand (10) der Steckverbindung (6a), die die Lichtbogeneinlage (6) aufweist.

5. Karosserieteil nach einem der Ansprüche 1 bis 4, **dadurch gekennzeichnet, dass** zwischen einer zweiten Gruppe von Karosserieteilen, die die Bogenverstärkung (5) und die Bogeneinlage (6) umfassen, ein Strukturkleberstrang (12) angeordnet ist, wobei der Strukturkleberstrang (12) zwischen den Umfangswänden (9) der Steckverbindungen (5a, 6a) angeordnet ist (d) die Bogenverstärkung (5) und die Bogeneinlage (6) umfassen.

6. Karosserie (1) eines Kraftfahrzeugs, die mit seitlichen Karosseriebaugruppen ausgestattet ist, nach einem der Ansprüche 1 bis 5, **dadurch gekennzeichnet, dass** die Karosseriebauteile (7, 5, 6) der ersten Gruppe jeder der Karosseriebaugruppen durch elektrische Schweißpunkte (11) über die Steckverbindungen (7a, 5a, 6a) aneinander befestigt sind.

7. Wagenkasten (1) nach Anspruch 6, **dadurch gekennzeichnet, dass** die Karosserieteile (5, 6) der zweiten Gruppe von jedem der Karosserieteile zusätzlich über eine Strukturkleberschnur (12), die zwischen den Umfangswänden (9) der Steckverbindungen (5a, 6a), die die Bogenverstärkung (5) und die Verkleidung umfassen, angeordnet ist, aneinander befestigt sind Bogen (6).

8. Wagenkasten (1) nach einem der Ansprüche 6 und 7, **dadurch gekennzeichnet, dass** das Fenster (13), das durch die Ständereinlage (8) gebildet ist, ferner ein Aufnahmeelement für eine Klammer zum Befestigen eines Fahrzeugzubehörteils bildet, wobei die Klammer ein Verschlusselement für das Fenster (13) bildet.

9. Verfahren zum Verbinden von Karosserieteilen einer Gruppe von Karosserieteilen nach einem der Ansprüche 1 bis 5, **dadurch gekennzeichnet, dass** es die folgenden Schritte umfasst:
-) die Karosserieteile (7, 5, 6) der ersten Gruppe durch nachfolgendes Einstecken in Verbindungsrichtung (D1) der Ständerverstärkung (7), der Bogenverstärkung (5) und der Bogeneinlage (6) über die darin enthaltenen Einsteckverbindungen (7a, 5a, 6a) und dann
-) die Karosserieteile (7, 5, 6) der ersten Gruppe durch mindestens einen elektrischen Schweißpunkt (11) über die darin vorgesehenen Steckverbindungen (7a, 5a, 6a) mittels eines Schweißwerkzeugs, das den Steckverbindungen (7a, 5a, 6a) in Montagerichtung (D1) nahekommt, miteinander verschweißt.

10. Verfahren nach Anspruch 9, **dadurch gekennzeichnet, dass** es ferner einen Schritt des Zusammenfügens der Karosserieteile (5, 6) der zweiten Gruppe mittels der Strukturklebernaht (12) vor deren Zusammenfügen untereinander und der Steigverstärkung (7) durch die Steckverbindungen (7a, 5a, 6a) durch mindestens einen elektrischen Schweißpunkt (11) umfasst.

## Claims

1. Body element assembly for a motor vehicle, comprising successively an increase of amount (7), an arc reinforcement (5), an arc lining (6) and an amount lining (8) successively fixed to each other according to an assembly direction (D1), such as a first group of bodywork elements comprising the reinforcement of amount (7), arc reinforcement (5) and the arc lining (6) are successively fixed to each other by at least one electrical weld point (11), via sockets (7a, 5a, 6a) which the bodywork elements (7, 5, 6) of the first group comprise respectively and which interpenetrate between them according to the assembly direction (D1) (a) by successive interlocking of the sockets (7a, 5a, 6a) within each other.

2. Body element assembly according to claim 1, **characterized in that** the sockets (7a, 5a, 6a) are each configured in a casing comprising a peripheral wall (9) which is enclosing a enclosure and includes a bottom wall (10) closing the enclosure by being substantially perpendicular to the assembly direction (D1), through which the bottom wall (10) intersecting (7a, 5a, 6a) successively intersected with each other are joined together by the electrical welding point (11).

3. Body element assembly according to claim 2, **characterized in that** the peripheral walls (9) of the sockets (7a, 5a, 6a) weigh one against the other successively two to two, and the bottom walls (10) of the sockets (7a, 5a, 6a) weigh one against the other successively two to two by being fixed between them by the point of electric welding (11).

4. Set of bodywork elements according to any of the claims 1 to 3, **characterized in that** the lining of mount (8) consists of a window (13) arranged in alignment of the sockets (7a, 5a, 6a) following the direction of assembly (D1), the window (13) forming a passage through the lining of mount (8) which is suitable to be crossed by a electric welding tool by point(s) to the bottom wall (10) of the socket (6a) that the arc lining contains (6).

5. A set of bodywork elements according to any of claims 1 to 4, **characterized by** a structural glue cord (12) being interposed between a second group of bodywork elements comprising the arc reinforcement (5) and the arc lining (6), the structural glue cord (12) being arranged between the peripheral walls (9) the sockets (5a, 6a) that comprise the arc reinforcement (5) and the arc lining (6).

6. Vehicle body box (1) equipped with side body parts according to any of c laims 1 to 5, **characterized by** the fact that the body parts (7, 5, 6) of the first group of each of the body parts assemblies are attached to each other by el ectric welding point(s) (11) via the said sockets (7a, 5a, 6a).

7. Motor vehicle body (1) according to claim 6, **characterized in that** the bodywork elements (5, 6) of said second group of each bodywork element set are additionally fixed to each other via a structural glue cord (12) interposed between the peripheral walls (9) of the sockets (5a, 6a) of the arc reinforcement (12) 5) and the arc lining (6).

8. Motor vehicle body (1) according to any one of claims 6 and 7, **characterized in that** said window (13) arranged through the amount lining (8) further forms an receiving organ for a fastening bracket of a vehicle accessory, said clamp forming a closing member of the window (13).

9. A method of assembly between bodywork parts of a body assembly according to any one of claims 1 to 5, **characterized in that** it includes the following operations:
-) assemble the bodywork elements (7, 5, 6) of the first group by successive socket according to the assembly direction (D1) of the height reinforcement (7), the arc reinforcement (5) and the arc lining (6), via the sockets (7a, 5a, 6a) which they contain, and
-) welding together the bodywork elements (7, 5, 6) of the first group by at least one electrical weld point (11) via the sockets (7a, 5a, 6a) they contain, by means of a welding tool close to the sockets (7a, 5a, 6a) following the assembly direction (D1).

10. Method according to claim 9, further **characterized in that** it comprises an assembly operation of the bodywork elements (5, 6) of the second group by means of said structural glue cord (12), prior to their assembly with each other and the uplift (7) via the sockets (7a, 5a, 6a) by at least one electrical weld point (11) .
